# EUROPÄISCHE PATENTSCHRIFT

(11) **EP 1 068 102 B1**
(45) Veröffentlichungstag und Bekanntmachung des Hinweises auf die Patenterteilung: **19.06.2002**
(21) Anmeldenummer: 99913299.6
(22) Anmeldetag: 25.03.1999
(51) Int. Cl.: B60R 11/02

(54) **EINSCHUBRAHMEN**
INSERTABLE RACK
CADRE INSERABLE

(30) Priorität: 01.04.1998 DE 19814534
(43) Veröffentlichungstag der Anmeldung: 17.01.2001
(73) Patentinhaber: Hermann Stahl GmbH, 71723 Grossbottwar (DE)
(72) Erfinder: STAHL, Hermann, D-71711 Steinheim (DE); WINDT, Uwe, D-71720 Oberstenfeld (DE); KUPPINGER, Michael, D-71711 Steinheim (DE)
(74) Vertreter: Wasmuth, Rolf, Dipl.-Ing.
(86) Internationale Anmeldenummer: EP9902025
(87) Internationale Veröffentlichungsnummer: WO9950093

(56) Entgegenhaltungen:
- EP-A- 0 142 896
- EP-A- 0 791 504
- DE-A- 19 614 781
- PATENT ABSTRACTS OF JAPAN vol. 014, no. 393 (M-1015), 24. August 1990 (1990-08-24) & JP 02 147445 A (MATSUSHITA ELECTRIC IND CO LTD), 6. Juni 1990 (1990-06-06)

## Beschreibung

Die Erfindung betrifft einen Einschubrahmen zum Einbau einer Baueinheit in einen Einbauschacht, insbesondere zum Einbau eines Autoradios in ein Kraftfahrzeug, nach dem Oberbegriff des Anspruchs 1.

Zum Einbau elektronischer Geräte in Kraftfahrzeugen werden regelmäßig Einschubrahmen verwendet, welche in Einbauschächte des Kraftfahrzeugs eingeschoben und in diesem unverlierbar verrastet werden. Derartige Einschubrahmen bestehen aus einem U-förmigen Grundrahmen, der durch eine Frontwand geschlossen ist. Die Frontwand weist endseitig abgewinkelte Flansche auf, welche mit den Rahmenschenkeln des Grundrahmens verschraubt oder vernietet werden. Dabei werden gleichzeitig auf den Außenseiten der Rahmenschenkel Federelemente mit Rastzungen festgelegt, die den Rand des Einbaurahmens hintergreifen, um den Einschubrahmen im Einbauschacht gegen Herausziehen zu sichern. Die Montage der Federelemente mit den Rastzungen sowie das mit zusätzlichen Befestigungsmitteln notwendige Festlegen der Frontwand an dem Grundrahmen ist zeit- und teileaufwendig.

Dokument DE-A-196 14 781 offenbart einen Einschubrahmen zum Einbau eines Autoradios in ein Kraftfahrzeug, bestehend aus einem das Autoradio umgreifenden U-förmigen Grundrahmen mit im Bereich der Rahmenschenkel vorgesehenen Rastzungen, welche mit Rastelementen den Rand des Einbauschachtes hintergreifen.

Der Erfindung liegt die Aufgabe zugrunde, einen Einschubrahmen anzugeben, der aus wenigen Teilen zusammengesetzt ist und ein sicheres Verrasten im Einbauschacht gewährleistet.

Die Aufgabe wird erfindungsgemäß nach den kennzeichnenden Merkmalen des Anspruchs 1 gelöst.

Die Befestigungsflansche werden durch einfaches Abwinkeln der Längsenden der Frontwand gebildet und so ausgestaltet, daß die Befestigungsflansche mit den Rahmenschenkeln unverlierbar verrasten. Zusätzliche Befestigungsmittel können entfallen. Da die Rastzungen einteilig an den Befestigungsflanschen ausgebildet sind, entfällt das ansonsten getrennt zu montierende Federelement. Durch einfaches Zusammenstecken des Grundrahmens und der Frontwand wird ein stabiler Einschubrahmen gebildet, der gleichzeitig die zur unverlierbaren Halterung im Einbauschacht notwendigen Rastzungen zeigt.

In einfacher Weise werden die freien Ecken des Befestigungsflansches in aus dem Rahmenschenkel herausgedrückten Haltetaschen gehalten, wobei vorzugsweise zum Einfädeln des Befestigungsflansches in die Haltetaschen ein zum freien Rand des Befestigungsflansches offener Führungsschlitz ausgebildet ist, der zwecks leichteren Einfädelns einer auf dem Rahmenschenkel angeordneten Führungswarze zum Rand des Befestigungsflansches hin erweitert ist. Zweckmäßig weist der Befestigungsflansch ferner eine Rastnase auf, die in eine Rastöffnung des Rahmenschenkels eingreift und die Lage des Befestigungsflansches relativ zu den Haltetaschen sichert. Um darüber hinaus ein Abheben von den Rahmenschenkeln sicher zu vermeiden, ist vorgesehen, im Bereich der Biegekante des Befestigungsflansches einen einen Rand des Rahmenschenkels übergreifen Haken auszubilden, wobei zweckmäßig der Führungsschlitz, der Haken und die Rastnase über die Länge des Befestigungsflansches hintereinander liegen.

Die Rastzungen sind zweckmäßig an einem oder beiden Längsrändern des Befestigungsflansches ausgebildet, insbesondere aus dem Blechmaterial der Frontwand bzw. der abgewinkelten Befestigungsflansche ausgeschnitten. Die Rastzunge ragt mit ihrem freien Ende über die Biegekante des Befestigungsflansches hinaus und ist so leicht zur Montage und Demontage des Einschubrahmens greifbar.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: in schematischer Darstellung einen erfindungsgemäßen Einbaurahmen zum Einbau einer Baueinheit in einen Einbauschacht,
- Fig. 2: einen Schnitt längs der Linie II-II in Fig. 1 mit Ansicht auf den Befestigungsflansch der Frontwand,
- Fig. 3: einen Schnitt längs der Linie III-III in Fig. 2,
- Fig. 4: einen Schnitt längs der Linie IV-IV in Fig. 2 durch eine Rastzunge.

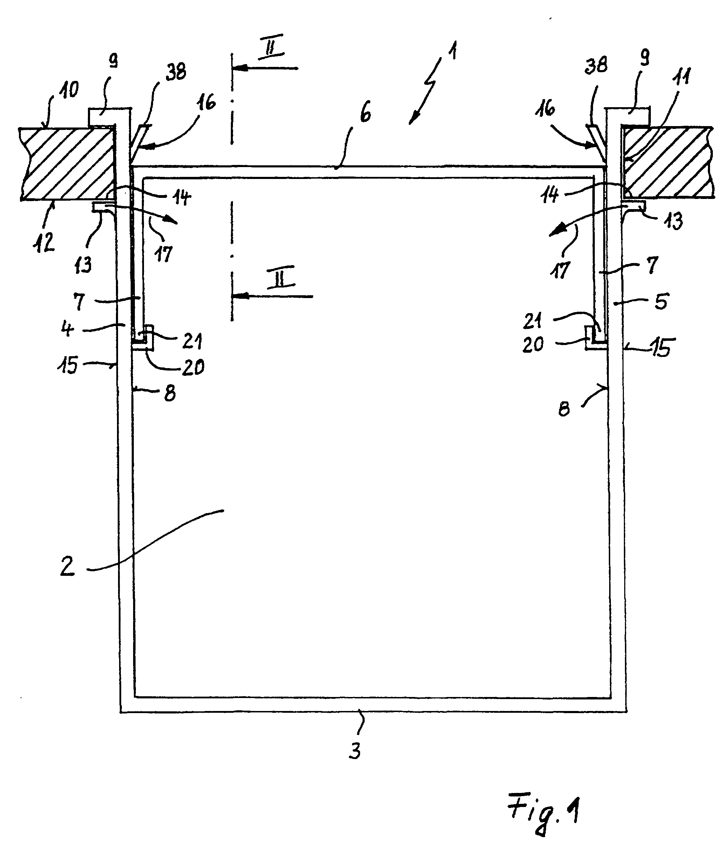

Der in Fig. 1 schematisch dargestellte Einschubrahmen 1 besteht im wesentlichen aus einem eine Baueinheit 2 umgreifenden U-förmigen Grundrahmen 3, der durch eine zwischen den Rahmenschenkeln 4, 5 angeordnete Frontwand 6 geschlossen ist. Die Frontwand 6 weist endseitig um etwa 90° abgewinkelte Befestigungsflansche 7 auf, die an den einander zugewandten Innenseiten 8 der Rahmenschenkel 4, 5 anliegen und an diesen unverlierbar gehalten sind. Die freien Enden 9 der Rahmenschenkel sind - wie Fig. 1 zeigt - rechtwinklig nach außen abgebogen und liegen am äußeren Rand des Einbauschachtes 11 an dessen Außenseite 10 an. An den Innenseiten 12 des Einbauschachtes liegen Rastelemente 13 an, die den Rand 14 des Einbauschachtes 11 hintergreifen, so daß der Einschubrahmen 1 unverlierbar fest im Einbauschacht 11 gehalten ist.

Die Rastelemente 13 sind seitlich der Frontwand 6 auf den einander abgewandten Außenseiten 15 der Rahmenschenkel 4, 5 vorgesehen und bevorzugt auf in Fig. 1 nicht näher dargestellten Rastzungen 16 gehalten, welche im Bereich der Rahmenschenkel 4, 5 vorgesehen sind. Die Rastelemente 13 können in Pfeilrichtung 17 durch entsprechendes Auslenken der Rastzungen 16 nach innen verstellt werden, so daß die Rastelemente 13 den rand 14 freigeben und der Einschubrahmen 1 ohne weiteres aus dem Einbauschacht 11 herausgezogen werden kann.

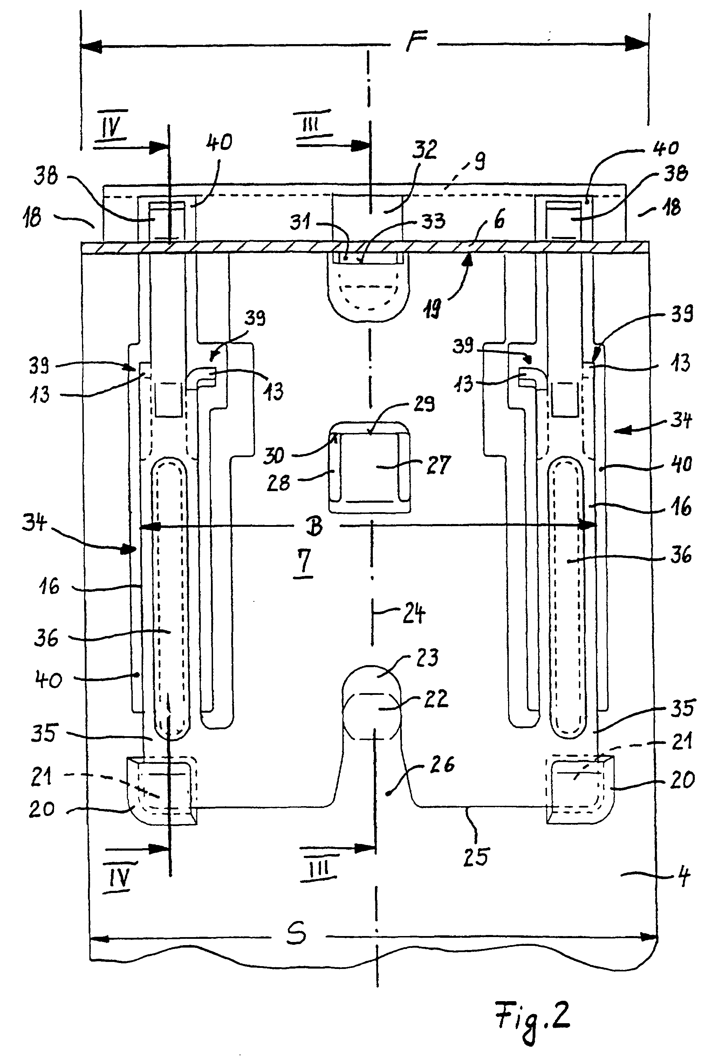

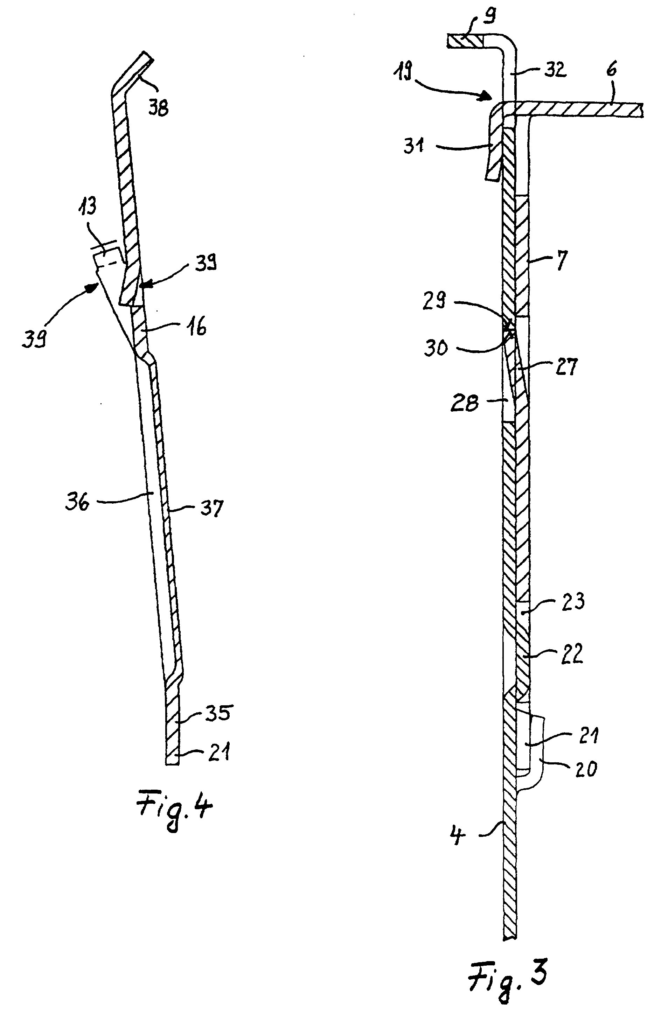

Die Gestaltung der Befestigungsflansche 7 und der an den Befestigungsflanschen ausgebildeten Rastzungen 16 ergibt sich im Detail aus den Fig. 2 bis 4.

Die Rahmenschenkel 4, 5 haben eine Breite S, die an ihren Enden durch Ausklinkungen 18 in der Breite reduziert ist. Die Frontwand 6 hat eine Breite F, die bevorzugt der Breite S der Rahmenschenkel 4 und 5 entspricht. Der von der Frontwand 6 abgewinkelte Befestigungsflansch 7 hat eine Breite B, die geringer als die Breite S der Rahmenschenkel 4 und 5 und der Breite F der Frontwand 6 ist. Dabei ist der Befestigungsflansch 7 als von der Frontwand 6 rechtwinklig abgewinkelter Endabschnitt ausgebildet; der Endabschnitt wird bevorzugt an einer Biegekante 19 abgebogen.

Zur unverlierbaren Halterung des Befestigungsflansches 7 an den Rahmenschenkeln 4 und 5 weisen diese aus dem Blech der Rahmenschenkel ausgestellte Haltetaschen 20 auf, die in Richtung zur Frontwand 6 offen sind und in die die freien äußeren Ecken 21 des Befestigungsflansches 7 eingeschoben werden. Zum leichteren Einfädeln der Ecken 21 in die Haltetaschen 20 ist eine über die Innenseite 8 vorstehende Führungswarze 22 vorgesehen, welche quer zur Längsmittelachse 24 des Flansches 7 etwa spielfrei mit einem Führungsschlitz 23 zusammenwirkt, der sich in Richtung der Längsmittelachse 24 des Befestigungsflansches erstreckt und zum freien Rand 25 des Befestigungsflansches 7 offen ist. Der Führungsschlitz 23 ist zum Rand hin erweitert und weist ein Führungsmaul 26 auf, welches quer zur Längsmittelachse 24 gemessen breiter als die Führungswarze 22 ist, so daß ein leichtes Einfädeln der Führungswarze 22 in den Führungsschlitz 23 gewährleistet ist.

Der Befestigungsflansch 7 weist eine vorzugsweise mittige Rastnase 27 auf, die mit seitlichem Spiel in eine Rastöffnung 28 des am Befestigungsflansch 7 flach anliegenden Rahmenschenkels 4, 5 eingreift. Die Rastnase 27 weist eine der Frontwand 6 zugewandt liegende Anschlagfläche 29 auf, welche im Einbauzustand des Befestigungsflansches 7 mit einer Gegenfläche 30 in der Rastöffnung 28 zusammenwirkt, derart, daß der Befestigungsflansch 7 zwischen den Haltetaschen 20 und der Gegenfläche 30 im wesentlichen spielfrei gehalten ist und quer zur Längsmittelachse 24 durch die Führungswarze 22 einerseits und die Haltetaschen 10 festgelegt ist.

Um das Zusammenwirken der Anschlagfläche 29 der Rastnase 27 mit der Gegenfläche 30 in der Rastöffnung 28 zu gewährleisten, ist im Bereich der Biegekante 19 des Befestigungsflansches 7 ein einen Rand 33 des Rahmenschenkels 4, 5 übergreifender Haken 31 ausgebildet. Im gezeigten Ausführungsbeispiel durchgreift der Haken ein Fenster 32 des Rahmenschenkels 4 und übergreift einen Fensterrand 33, so daß der Befestigungsflansch 7 senkrecht zum Rahmenschenkel 4, 5 durch den Haken 31 und die die freien Ecken 21 übergreifenden Haltetaschen 20 unverlierbar fixiert ist. Die Führungswarze 22, der Führungsschlitz 23, die Rastnase 27, der Haken 31 und das Fenster 32 liegen dabei etwa symmetrisch zur Längsmittelachse 24 des Befestigungsflansches 7 hintereinander.

An den Längsrändern 34 des Befestigungsflansches 7 sind sich vom freien Rand 25 zur Biegekante 19 erstreckende Rastzungen 16 ausgebildet, wobei im gezeigten Ausführungsbeispiel an jedem Längsrand 34 eine Rastzunge 16 ausgestaltet ist. Die Rastzungen sind einteilig mit den Befestigungsflanschen 7 ausgebildet; im gezeigten Ausführungsbeispiel sind die Rastzungen 16 aus dem Material des Befestigungsflansches 7, nämlich einem Blech, ausgeschnitten.

Jede Rastzunge zeigt eine sich längs erstreckende Vertiefung 36, welche sich aus dem Fußbereich 35 einer Rastzunge 16 etwa über deren halbe Länge bis in den Bereich der Rastelemente 13 erstreckt. Die Vertiefung 36 hat - wie Fig. 4 zeigt - einen in der Materialdicke reduzierten Boden 37, wodurch die Rastzunge 16 senkrecht zum Rahmenschenkel 4 elastisch wird. Um eine Rastzunge 16 mit großer Federsteifigkeit auszubilden, ist die Vertiefung 36 mit einem umlaufenden Rand vorgesehen, wie insbesondere die Fig. 2 und 4 zeigen. Die Rastzungen 16 erstrecken sich mit ihren freien Enden über die Biegekante 19 hinaus und sind als Betätigungsenden 38 ausgebildet, die - wie Fig. 1 zeigt - auf den Innenseiten 8 der Rahmenschenkel 4 und 5 liegen.

Die Rastelemente 13 der Rastzunge 16 sind einteilig durch Abbiegen von mit den Rastzungen ausgeschnittenen Laschen 39 gebildet, wobei bevorzugt an beiden Längsrändern der Rastzunge 16 etwa auf gleicher Höhe Rastelemente 13 vorgesehen sind.

Die Rastzungen sind in Richtung auf die Rahmenschenkel 4, 5 abgebogen und liegen in Zungenöffnungen 40, welche in den Rahmenschenkeln auf Höhe der Rastzungen 16 vorgesehen sind und sich über die Biegekante 19 bis in die Frontwand 6 erstrecken. Die Zungenöffnungen 40 erstrecken sich in Längsrichtung der Rahmenschenkel 4, 5 von dem nach außen abgebogenen Ende 9 bis in den Bereich der Haltetaschen 20, wobei die längliche Zungenöffnung 40 jeweils vor dem Fußbereich 35 einer Rastzunge 16 endet. Wie Fig. 1 zeigt, ragen die Rastelemente 13 aus den Rahmenschenkeln 4 und 5 heraus und stehen über deren Außenseite 15 über. Auf diese Weise hintergreifen die Rastelemente 13 den Rand 14 des Einbauschachtes 11, wobei die durch Verprägen federnde Eigenschaften aufweisenden Rastzungen 16 die in Fig. 1 gezeigte Raststellung der Rastelemente 13 gewährleisten.

Zum Ausbau des Einschubrahmens 1 werden die über die Frontwand 6 überstehenden Betätigungsenden 38 der Rastzungen 16 nach innen ausgelenkt, wodurch die Rastelemente 13 in Pfeilrichtung 17 zurückgestellt werden und der Einschubrahmen 1 aus dem Einbauschacht 11 herausgezogen werden kann. Der Einbau des Einschubrahmens 1 erfolgt in entsprechend umgekehrter Reihenfolge der Betätigungsschritte.

De Einschubrahmen eignet sich insbesondere zum Einbau eines Autoradios in einen Einbauschacht eines Kraftfahrzeuges. In gleicher Weise können andere elektronische Geräte wie Funktelefon, Funkgerät oder dergleichen mit dem erfindungsgemäßen Einschubrahmen in einen Einbauschacht montiert werden.

## Patentansprüche

1. Einschubrahmen zum Einbau einer Baueinheit in einen Einbauschacht, insbesondere zum Einbau eines Autoradios in ein Kraftfahrzeug, bestehend aus einem die Baueinheit (2) umgreifenden U-förmigen Grundrahmen (3), der durch eine Frontwand (6) geschlossen ist, die mit endseitig abgewinkelten Befestigungsflanschen (7) an den Rahmenschenkeln (4, 5) befestigt ist, und mit seitlich der Frontwand (6) im Bereich der Rahmenschenkel (4, 5) vorgesehenen Rastzungen (16), welche mit Rastelementen (13) den Rand (14) des Einbauschachtes (11) hintergreifen, **dadurch gekennzeichnet, daß** die Befestigungsflansche (7) als von der Frontwand (6) abgewinkelte Endabschnitte ausgebildet sind, daß die Befestigungsflansche (7) mit den Rahmenschenkeln (4, 5) unverlierbar verrastbar sind und daß die Rastzungen (16) einteilig an den Befestigungsflanschen (7) ausgebildet sind.

2. Einschubrahmen nach Anspruch 1,
**dadurch gekennzeichnet, daß** die Befestigungsflansche (7) an einander zugewandten Innenseiten (8) der Rahmenschenkel (4, 5) anliegen.

3. Einschubrahmen nach Anspruch 1 oder 2,
**dadurch gekennzeichnet, daß** der Befestigungsflansch (7) an seinen freien Ecken (21) in Haltetaschen (20) des Rahmenschenkels (4, 5) gehalten ist.

4. Einschubrahmen nach Anspruch 3,
**dadurch gekennzeichnet, daß** die Haltetaschen (20) einteilig mit dem Rahmenschenkel (4, 5) ausgebildet sind.

5. Einschubrahmen nach einem der Ansprüche 1 bis 4,
**dadurch gekennzeichnet, daß** an dem freien Ende des Befestigungsflansches (7) ein zum freien Rand (25) des Befestigungsflansches offener Führungsschlitz (23) ausgebildet ist, der zum Rand (25) hin erweitert ist und mit einer Führungswarze (22) des Rahmenschenkels (4, 5) zusammenwirkt.

6. Einschubrahmen nach einem der Ansprüche 1 bis 5,
**dadurch gekennzeichnet, daß** der Befestigungsflansch (7) eine Rastnase (27) aufweist, die in eine Rastöffnung (28) des Rahmenschenkels (4, 5) eingreift.

7. Einschubrahmen nach einem-der Ansprüche 1 bis 6,
**dadurch gekennzeichnet, daß** im Bereich der Biegekanten (19) des Befestigungsflansches (7) ein einen Rand (33) des Rahmenschenkels (4, 5) übergreifender Haken (31) ausgebildet ist.

8. Einschubrahmen nach den Ansprüchen 5 bis 7,
**dadurch gekennzeichnet, daß** der Führungsschlitz (23), die Rastnase (27) und der Haken (31) über die Länge des Befestigungsflansches (7) vorzugsweise auf dessen Längsmittelachse (24) hintereinander liegen.

9. Einschubrahmen nach einem der Ansprüche 1 bis 8,
**dadurch gekennzeichnet, daß** die Rastzunge (16) an einem Längsrand (34) des Befestigungsflansches (7) ausgebildet ist.

10. Einschubrahmen nach Anspruch 9,
**dadurch gekennzeichnet, daß** die Rastzungen (16) aus dem Blechmaterial der Frontwand (6) ausgeschnitten sind.

11. Einschubrahmen nach einem der Ansprüche 1 bis 10,
**dadurch gekennzeichnet, daß** die Rastelemente (13) der Rastzungen (16) durch Abbiegen von ausgeschnittenen Laschen (39) gebildet sind.

12. Einschubrahmen nach einem der Ansprüche 1 bis 11,
**dadurch gekennzeichnet, daß** die Rastzunge (16) mit ihrem freien Ende (38) über die Biegekante (19) des Befestigungsflansches (7) hinausragt.

13. Einschubrahmen nach einem der Ansprüche 1 bis 12,
**dadurch gekennzeichnet, daß** die Rastzungen (16) in Längsöffnungen (40) des Rahmenschenkels (4, 5) liegen und zumindest mit ihrem Rastelement (13) den Rahmenschenkel (4, 5) durchragen.

14. Einschubrahmen nach einem der Ansprüche 1 bis 13,
**dadurch gekennzeichnet, daß** das Material der Rastzunge (16) über zumindest einen Teil ihrer Länge in der Dicke reduziert ist.

15. Einschubrahmen nach einem der Ansprüche 1 bis 14,
**dadurch gekennzeichnet, daß** die Rastzunge (16) über eine Teillänge mit einer randbildenden, eingeprägten Vertiefung (36) ausgebildet ist.

16. Einschubrahmen nach einem der Ansprüche 1 bis 15,
**dadurch gekennzeichnet, daß** der Befestigungsflansch (7) eine geringere Breite (B) als der Rahmenschenkel (4, 5) oder die Frontwand (6) aufweist.

## Claims

1. Slot-in frame for fitting a unit in a mounting shaft, in particular for mounting a car radio in a motor vehicle, consisting of a u-shaped base frame (3) engaging around the unit (2) and closed by a front wall (6) which is secured to the frame legs (4, 5) by end-side mounting flanges (7) bent in at an angle, latch tongues (16) being provided to the side of the front wall (6) in the region of the frame legs (4, 5) which engage behind the edge (14) of the mounting shaft (11) by means of latching elements (13), **characterised in that** the mounting flanges (7) are sections of the front wall (6) bent in at an angle, **in that** the mounting flanges (7) are latchable with the frame legs (4, 5) in a captive fit and **in that** the latch tongues (16) are integral with the mounting flanges (7).

2. Slot-in frame as claimed in claim 1,
**characterised in that** the mounting flanges (7) sit against oppositely facing internal faces (8) of the frame legs (4, 5).

3. Slot-in frame as claimed in claim 1 or 2,
**characterised in that** the mounting flange (7) is retained at its free corners (21) in retaining pockets (20) of the frame legs (4, 5).

4. Slot-in frame as claimed in claim 3,
**characterised in that** the retaining pockets (20) are integral with the frame legs (4, 5).

5. Slot-in frame as claimed in one of claims 1 to 4,
**characterised in that** at the free ends of the mounting flange (7), a guide slot (23) is provided, open to the free edge (25) of the mounting flange, which widens towards the edge (25) and co-operates with a guide projection (22) of the frame leg (4, 5).

6. Slot-in frame as claimed in one of claims 1 to 5,
**characterised in that** the mounting flange (7) has a latch nose (27) which locates in a latch orifice (28) of the frame leg (4, 5).

7. Slot-in frame as claimed in one of claims 1 to 6,
**characterised in that** in the region of the bending edges (19) of the mounting flange (7), a hook (31) is provided engaging over an edge (33) of the frame leg (4, 5).

8. Slot-in frame as claimed in claims 5 to 7,
**characterised in that** the guide slot (23), the latch nose (27) and the hook (31) lie along the length of the mounting flange (7) preferably on the longitudinal central axis (24) thereof.

9. Slot-in frame as claimed in one of claims 1 to 8,
**characterised in that** the latch tongue (16) is provided on a longitudinal edge (34) of the mounting flange (7).

10. Slot-in frame as claimed in claim 9,
**characterised in that** the latch tongues (16) are cut out from the sheet material of the front wall (6).

11. Slot-in frame as claimed in one of claims 1 to 10,
**characterised in that** the latching elements (13) of the latch tongues (16) are formed by bending back cut-out lugs (39).

12. Slot-in frame as claimed in one of claims 1 to 11,
**characterised in that** the free end (38) of the latch tongue (16) projects beyond the bending edge (19) of the mounting flange (7).

13. Slot-in frame as claimed in one of claims 1 to 12,
**characterised in that** the latch tongues (16) lie in longitudinal orifices (40) of the frame leg (4, 5) and project through the frame leg (4, 5) by at least their latching element (13).

14. Slot-in frame as claimed in one of claims 1 to 13,
**characterised in that** the material of the latch tongue (16) is of a reduced thickness across at least a part of its length.

15. Slot-in frame as claimed in one of claims 1 to 14,
**characterised in that** the latch tongue (16) is provided with a ridge-forming indented recess (36) across a part-length.

16. Slot-in frame as claimed in one of claims 1 to 15,
**characterised in that** the mounting flange (7) is narrower in width (B) than the frame legs (4, 5) or the front wall (6).

## Revendications

1. Châssis insérable destiné au montage d'un module de construction dans un logement d'encastrement, notamment destiné au montage d'un autoradio dans un véhicule automobile, constitué d'un châssis de base (3) en forme de U entourant le module de construction (2) et fermé par une paroi frontale (6), qui est fixée aux branches (4, 5) du châssis au moyen de flasques de fixation (7) coudés à l'extrémité, et comportant des languettes d'encliquetage (16) qui sont prévues latéralement à la paroi frontale (6) dans la zone des branches (4, 5) du châssis, et qui s'engagent avec des éléments d'encliquetage (13), derrière le bord (14) du logement d'encastrement (11), **caractérisé en ce que** les flasques de fixation (7) sont réalisés en tant que tronçons d'extrémité coudés de la paroi frontale (6), **en ce que** les flasques de fixation (7) peuvent s'encliqueter de manière imperdable avec les branches (4, 5) du châssis, et **en ce que** les languettes d'encliquetage (16) sont réalisées d'un seul tenant sur les flasques de fixation (7).

2. Châssis insérable selon la revendication 1, **caractérisé en ce que** les flasques de fixation (7) s'appuient sur des faces intérieures (8) en regard l'une de l'autre, des branches (4, 5) du châssis.

3. Châssis insérable selon la revendication 1 ou 2, **caractérisé en ce que** le flasque de fixation (7) est maintenu à ses coins libres (21), dans des cavités de maintien (20) de la branche (4, 5) du châssis.

4. Châssis insérable selon la revendication 3, **caractérisé en ce que** les cavités de maintien (20) sont réalisées d'un seul tenant avec la branche (4, 5) du châssis.

5. Châssis insérable selon l'une des revendications 1 à 4, **caractérisé en ce qu'**à l'extrémité libre du flasque de fixation (7) est formée une fente de guidage (23) qui est ouverte en direction du bord libre (25) du flasque de fixation, s'évase en direction du bord (25), et interagit avec une protubérance de guidage (22) de la branche (4, 5) du châssis.

6. Châssis insérable selon l'une des revendications 1 à 5, **caractérisé en ce que** le flasque de fixation (7) présente un talon d'encliquetage (27) qui s'engage dans une ouverture d'encliquetage (28) de la branche (4, 5) du châssis.

7. Châssis insérable selon l'une des revendications 1 à 6, **caractérisé en ce que** dans la zone des arêtes de pliage (19) du flasque de fixation (7) est formé un crochet (31) surmontant un bord (33) de la branche (4, 5) du châssis.

8. Châssis insérable selon l'une des revendications 5 à 7, **caractérisé en ce que** la fente de guidage (23), le talon d'encliquetage (27) et le crochet (31) se situent les uns à la suite des autres le long du flasque de fixation (7), de préférence sur l'axe longitudinal (24) de ce dernier.

9. Châssis insérable selon l'une des revendications 1 à 8, **caractérisé en ce que** la languette d'encliquetage (16) est réalisée au niveau d'un bord longitudinal (34) du flasque de fixation (7).

10. Châssis insérable selon la revendication 9, **caractérisé en ce que** les languettes d'encliquetage (16) sont découpées dans le matériau de tôle de la paroi frontale (6).

11. Châssis insérable selon l'une des revendications 1 à 10, **caractérisé en ce que** les éléments d'encliquetage (13) des languettes d'encliquetage (16) sont formées par le pliage de pattes (39) découpées.

12. Châssis insérable selon l'une des revendications 1 à 11, **caractérisé en ce que** la languette d'encliquetage (16) fait saillie, avec son extrémité libre (38), au-delà de l'arête de pliage (19) du flasque de fixation (7).

13. Châssis insérable selon l'une des revendications 1 à 12, **caractérisé en ce que** les languettes d'encliquetage (16) se situent dans des ouvertures longitudinales (40) de la branche (4, 5) du châssis, et traversent la branche (4, 5) du châssis, au moins avec leur élément d'encliquetage (13).

14. Châssis insérable selon l'une des revendications 1 à 13, **caractérisé en ce que** le matériau de la languette d'encliquetage (16) est d'une épaisseur réduite sur au moins une partie de sa longueur.

15. Châssis insérable selon l'une des revendications 1 à 14, **caractérisé en ce que** la languette d'encliquetage (16) est conçue avec un creux (36) réalisé par formage et formant des bords.

16. Châssis insérable selon l'une des revendications 1 à 15, **caractérisé en ce que** le flasque de fixation (7) présente une largeur (B) plus faible que la branche (4, 5) du châssis ou la paroi frontale (6).
